# EUROPEAN PATENT APPLICATION

(11) **EP 1 551 188 A1**
(43) Date of publication of application: **06.07.2005**
(21) Application number: 04106982.4
(22) Date of filing: 24.12.2004
(51) Int. Cl.: H04N 13/00, G02B 27/22, G09F 19/14

(54) **Video Display**

(30) Priority: 25.12.2003 JP 2003429765
(71) Applicant: Sany Electric Co. Ltd., Moriguchu City, Osaka (JP)
(72) Inventor: Mashitani, Ken, Osaka (JP)
(74) Representative: Piotrowicz, Pawel Jan Andrzej

(57) **Abstract**

A personal computer monitor 20 comprises a liquid crystal display panel 21 and a liquid crystal barrier 22. A first image and a second image are respectively drawn on a vertical line 21A and a vertical line 21B in the liquid crystal display panel 21. The liquid crystal barrier 22 is formed with apertures 22a in a vertically-striped shape. Each of the apertures 22a is formed in correspondence with a set of vertical lines 21A and 21B, and is so designed as to introduce the first image to the right eye of a user positioned spaced apart from a screen by a predetermined distance and introduce the second image to the left eye of the user. The first image is an image of a received e-mail, and the second image is an image obtained by subjecting the first image to rightward position shifting processing.

## Description

### BACKGROUND OF THE INVENTION

### Field of the Invention

The present invention relates to a video display equipped with a so-called privacy function for preventing from being taken a peek at the contents displayed on a screen from the side position of the screen.

As a video display equipped with a so-called privacy function, a liquid crystal display using a polarizing thin film which can be arranged at an arbitrary position has been proposed (see JP-A-2001-222004).

### SUMMARY OF THE INVENTION

However, a user feels inconvenient because he or she has to wear polarizing thin films as glasses, for example.

In view of the foregoing circumstances, an object of the present invention is to provide a video display capable of realizing a so-called privacy function without imposing a burden on a user.

In order to solve above-mentioned problem, a video display according to the present invention is characterized by comprising image separation means for restricting a view area in which an image displayed on a screen can be seen, and display means for displaying an image to be displayed and an image produced by shifting the position of the aforementioned image on the screen, a view area where the displayed image is seen double being in a position except right in front of the screen.

A video display according to the present invention is characterized by comprising image separation means for restricting a view area in which an image displayed on a screen can be seen; and display means for producing an image to be displayed and an image different from the image and displaying the produced images on the screen, a view area where the different image is seen or a view area where the image to be displayed and the different image are seen in an overlapped state being in a position except right in front of the screen.

A video display according to the present invention is characterized by comprising image separation means for restricting a view area in which an image displayed on a screen can be seen, and display means for displaying an image to be displayed, a view area where a moiré is seen being in a position except right in front of the screen.

In these configurations, if the contents displayed on the screen are taken a peek at from the side position of the screen, the original image is difficult to be seen by an overlapping of images and a moiré. Consequently, it is difficult for persons other than a user right in front of the screen to visually recognize the contents on the screen, thereby realizing a privacy function.

The execution and the stop of an image separating function in the image separation means may be switched. The image separating function in the image separation means may be executed when a privacy mode is selected by a user. Alternatively, the image separating function in the image separation means may be executed when the image to be displayed is an image of an e-mail. The luminance and the contrast of the screen may be lowered when the image separating function in the image separation means is executed.

The foregoing and other objects, features, aspects and advantages of the present invention will become more apparent from the following detailed description of the present invention hen taken in conjunction with the accompanying drawings.

### BRIEF DESCRIPTION OF THE DRAWINGS

Fig. 1 is an explanatory view of an embodiment of the present invention, illustrating a video display and a user;
Fig. 2A is an explanatory view, corresponding to Fig. 1, illustrating a display image, Fig. 2B is an explanatory view, corresponding to Fig. 1, illustrating an image viewed from a position right opposite to the screen, and 2C is an explanatory view, corresponding to Fig. 1, illustrating an image viewed from the side position;
Fig. 3 is an explanatory view of another example of the embodiment of the present invention, illustrating a video display and a user;
Fig. 4A is an explanatory view, corresponding to Fig. 3, illustrating a display image, Fig. 4B is an explanatory view, corresponding to Fig. 3, illustrating an image viewed from a position right opposite to the screen, and 4C is an explanatory view, corresponding to Fig. 3, illustrating an image viewed from the side position;
Fig. 5 is an explanatory view of another example of the embodiment of the present invention, illustrating a video display and a user;
Fig. 6A is an explanatory view, corresponding to Fig. 5, illustrating an image viewed from a position right opposite to the screen, and 6B is an explanatory view, corresponding to Fig. 5, illustrating an image viewed from the side position;
Fig. 7 is a block diagram showing an example of the architecture of a personal computer; and
Fig. 8 is an explanatory view showing a general video card.

### DESCRIPTION OF THE PREFERRED EMBODIMENTS

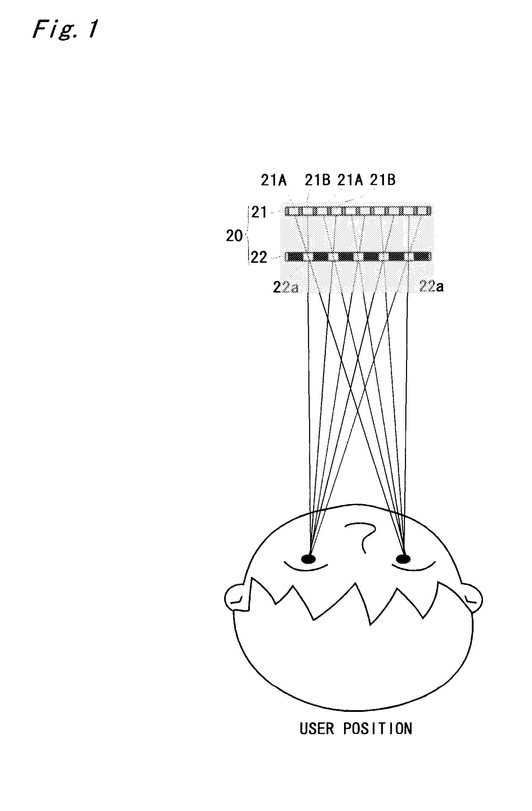

An embodiment of the present invention will be described on the basis of Figs. 1 to 8. Although a personal computer comprising a communication environment will be illustrated below, portable equipment such as a portable telephone can be also similarly configured as a video display according to the present invention.

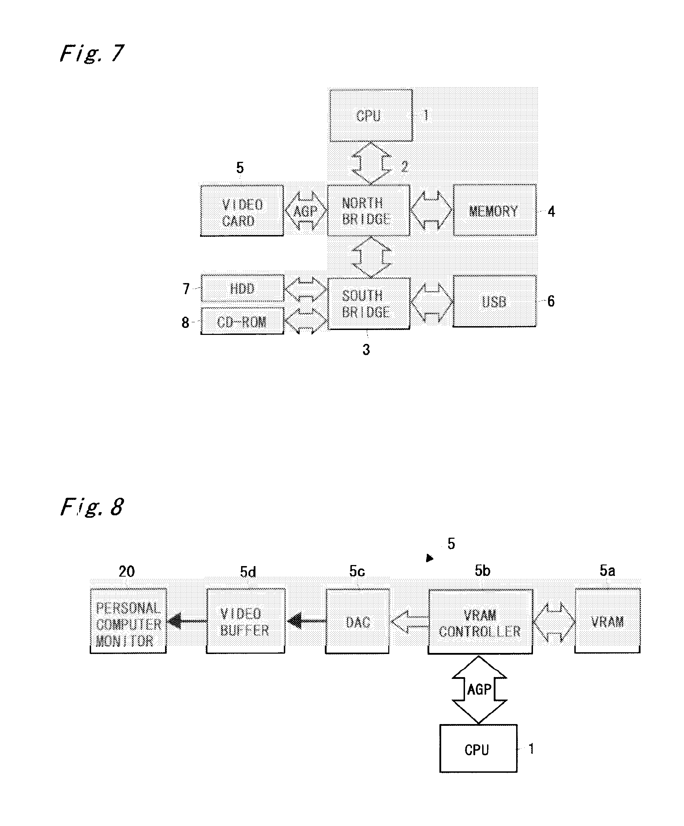

Fig. 7 illustrates an example of the architecture of a personal computer. A CPU 1 is connected to a north bridge 2 having a system control function and a south bridge 3 having an interface function such as a PCI (Peripheral Component Interconnect) bus or an ISA (Industry Standard Architecture) bus. A memory 4 and a video card 5 through an AGP (Accelerated Graphics Port) are connected to the north bridge 2. A USB (Universal Serial Bus) interface 6, a hard disc drive (HDD) 7, a CD-ROM device 8, and so on are connected to the south bridge 3.

Fig. 8 illustrates a general video card 5. A VRAM (Video Memory) controller 5b controls writing and reading of drawing data to and from a VRAM 5a by an instruction from the CPU 1 through the AGP. A DAC (Digital/Analog converter) 5c converts digital video data from the VRAM controller 5b into an analog video signal, and feeds the video signal to a personal computer monitor 20 through a video buffer 5d. In such video display processing (drawing processing), privacy mode processing for generating a first video (image) and a second video (image) and alternately drawing the videos (images) in a vertically-striped shape can be performed.

The personal computer comprises an Internet connection environment, and can receive files (e.g., a document file, an e-mail, an HTML (Hypertext Markup Language) file, an XML (Extensible Markup Language) file, etc.) from a transmission-side device constructed as a server or the like on the Internet. Further, the personal computer comprises a liquid crystal barrier in the monitor 20, for example, thereby making it possible to perform both normal video display and video display for a privacy mode. If the video for a privacy mode is obtained by alternately arranging a left eye video (image) and a right eye video (image) in a vertically-striped shape, for example, a vertically-striped shading area is formed in the liquid crystal barrier by the control of the CPU 1. If the video for a privacy mode is displayed in a partial area (a window portion for file reproduction or a partial video portion of an e-mail document) on a screen, the size and the position for formation of the vertically-striped shading area may be controlled on the basis of the display coordinates and the size of the window portion or the partial video portion by the CPU 1. Not only the liquid crystal barrier but also a normal barrier (in which barrier stripes are fixedly formed at a predetermined pitch) may be used. Further, word processor software, mail software, and so on are installed on the personal computer. A video can be displayed on the monitor 20 by opening a file.

Video display processing for a privacy mode performed by a personal computer (software) on a file will be described on the basis of Figs. 1 to 6.

Fig. 1 illustrates a personal computer monitor 20 and a user. The personal computer monitor 20 comprises a liquid crystal display panel 21 and a liquid crystal barrier 22. A first image and a second image are respectively drawn on a vertical line 21A and a vertical line 21B in the liquid crystal display panel 21. The vertical lines 21A and the vertical lines 21B are alternately formed. Apertures 22a are formed in the liquid crystal barrier 22 in a vertically-striped shape. Each of the apertures 22a is formed in correspondence with a set of vertical lines 21A and 21B, and is so designed as to guide the first image to the right eye of the user positioned spaced apart from a screen by a predetermined distance and guide the second image to the left eye of the user.

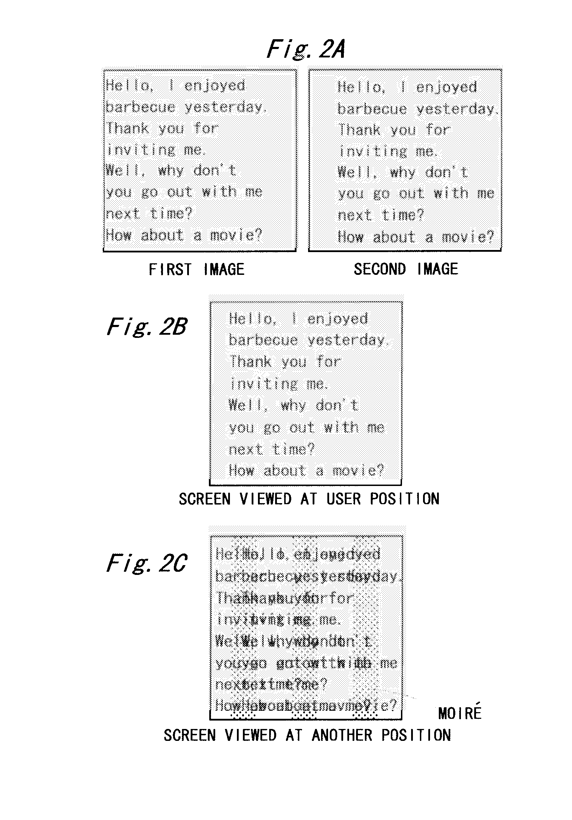

Fig. 2A illustrates an example of the first image and the second image. For example, the first image is an image of a received e-mail, and the second image is an image obtained by subjecting the first image to rightward position shifting processing. A user who watches the personal computer monitor 20 at a user position (a position right opposite to the screen) shown in Fig. 1 sees an image which is not double, as shown in Fig. 2B. The image can be stereoscopically viewed on the front side of the screen. On the other hand, at the side positions of the user position (the position right opposite to the screen), for example, a double image (further, a moiré) is seen, as shown in Fig. 2C. An existence of a state (bright) where light from the whole of pixels is given to the eyes of the viewer and a state (dark) where a non-pixel portion is given to the eyes of the viewer makes the viewer feel a moiré (an interference stripe).

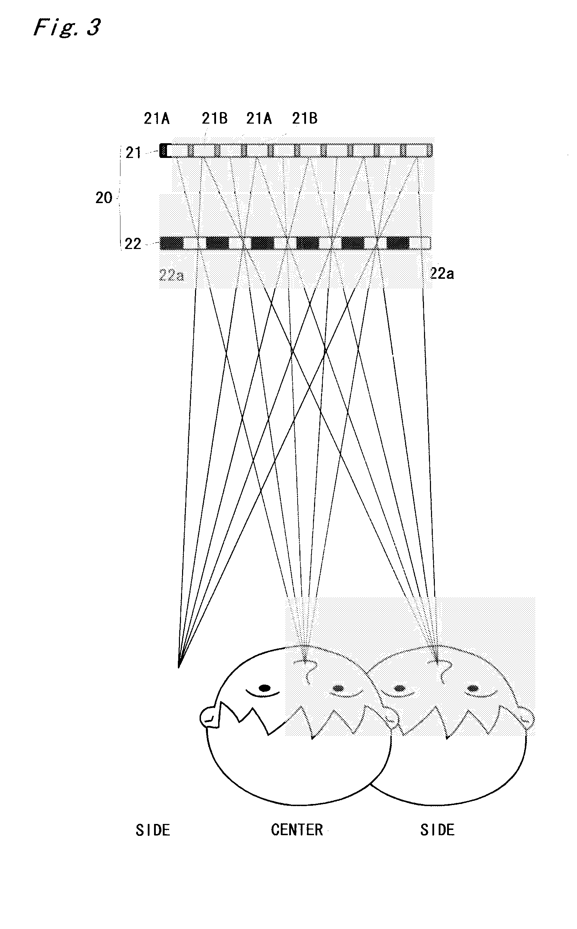

In an example shown in Fig. 3, an image for center position and an image for side position are respectively drawn on a vertical 1 line 21A and a vertical line 21B of a liquid crystal display panel 21. Each of apertures 22a in the liquid crystal barrier 22 is so designed as to guide the image for center position into a center position (a position spaced apart from a screen by a predetermined distance toward the front thereof), while guiding the image for side position into a side position (e.g., a position shifted by one head sideward from the center position).

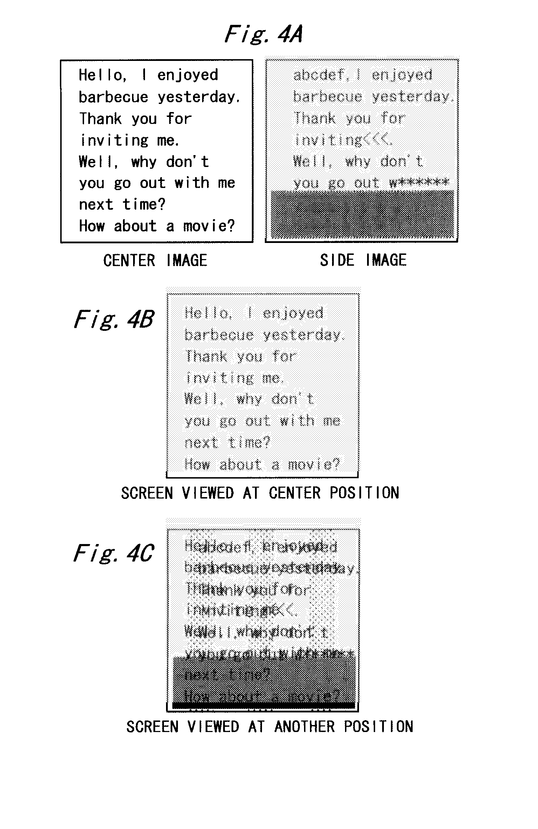

Fig. 4A illustrates examples of the image for center position and the image for side position. For example, the image for center position is an image (character) of a received e-mail, and the image for side position is a character string (text) image different from the received e-mail. The different character string image may be a previously prepared character string image or may be a character string produced, with respect to all or parts of characters composing the received e-mail, by a character code obtained by adding one to its original character code. Further, the characters composing the different character string image may be in the same color as that of the characters composing the received e-mail. Further, the different character string image may be an image which is not a character string, for example, a background image in the same color as that of the characters composing the received e-mail. A user who watches the personal computer monitor 20 at the center position shown in Fig. 3 sees only the image of the received e-mail, as shown in Fig. 4B. On the other hand, a viewer sees the different character string image at the side position. At another position such as an intermediate view position between the center position and the side position, the viewer sees an image in which the character string image of the received e-mail is overlapping with the different character string image (and also sees a moiré), as shown in Fig. 4C.

In the configuration shown in Fig. 3, the image for center position may be an image of a received e-mail, and the image for side position may be an image obtained by subjecting the image of the received e-mail to position shifting processing. In this case, the image of the received e-mail can be seen at the side position as well as the center position, while a double image (further, a moiré) is seen at another position such as the intermediate view position between the center position and the side position.

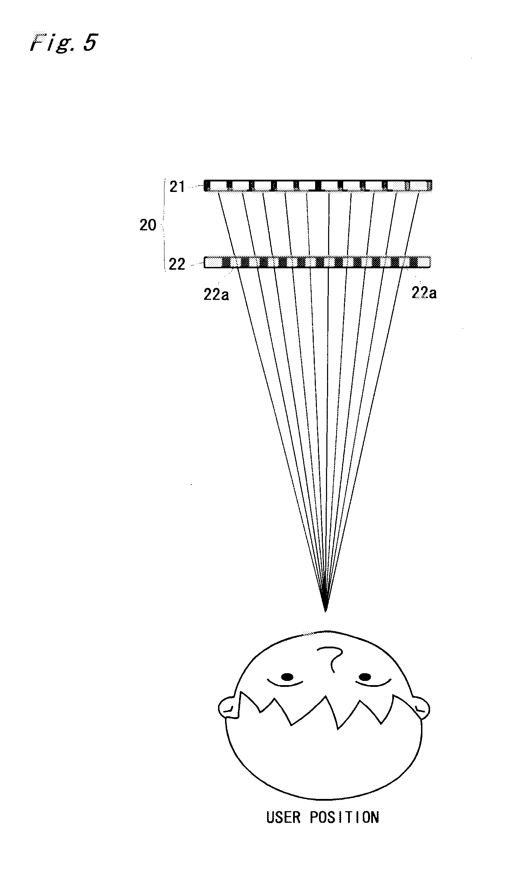

In an example shown in Fig. 5, an image to be displayed is drawn on the liquid crystal display panel 21. Each of apertures 22a in the liquid crystal barrier 22 is so designed as to guide the image to a user position (a position right opposite to the screen).

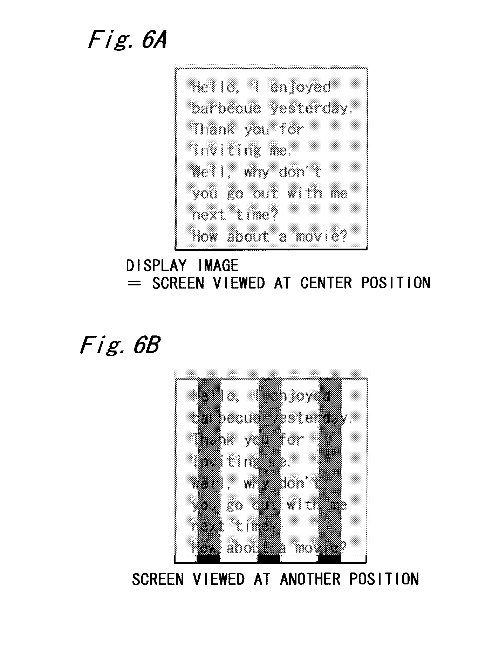

Fig. 6A illustrates an example of an image to be displayed. The image to be displayed is an image of a received e-mail, for example. The user who watches the personal computer monitor 20 at the user position shown in Fig. 5 sees an image with no moiré shown in Fig. 6A. On the other hand, the image of the received e-mail with a moiré is seen, as shown in Fig. 6B, at the side position.

The above-mentioned video display processing for a privacy mode is not always performed. It may be performed when the privacy mode is selected by the user. When the privacy mode is not selected, the liquid crystal barrier 22 is controlled so as to enter a full transmission state (execute application or non-application of a voltage to a liquid crystal), while normal drawing processing is performed in the liquid crystal display panel 21. The privacy mode may be selected by setting on a menu screen, pressing a dedicated button, or pressing a predetermined button for a few seconds.

The video display may be so configured that the privacy mode is automatically executed only at the time of displaying a received e-mail on a screen or at the time of producing an e-mail. For example, mail software may request an OS (Operating System) to execute a privacy mode when it is started so that the liquid crystal barrier 22 and the liquid crystal display panel 21 are controlled by the OS. Further, in executing the privacy mode, processing for lowering the luminance of the screen may be performed by the control of the OS, for example (power supplied to a backlight is controlled in the case of the liquid crystal display panel). Further, in executing the privacy mode, processing for lowering the contrast of the screen may be performed. The luminance and the contrast are thus lowered so that the contents of display on the screen are more difficult to be seen from the side position.

Although in the above-mentioned example, the personal computer monitor 20 comprises the liquid crystal display panel 21, the liquid crystal display panel may be replaced with an organic EL display panel, a plasma display, or the like. Although video separation by a vertically-striped barrier system is illustrated, image separation by a diagonally-striped barrier system may be performed. Further, the video separation may be performed using not only the barrier system but also a lenticular lens.

According to the present invention, the effect of allowing a so-called privacy function to be realized without imposing a burden on a user since the user need not wear polarizing light glasses.

Although the present invention has been described and illustrated in detail, it is clearly understood that the same is by way of illustration and example only and it not to be taken by way of limitation, the spirit and scope of the present invention being limited only by the terms of the appended claims.

## Claims

1. A video display comprising:
image separation means for restricting a view area in which an image displayed on a screen can be seen; and
display means for displaying an image to be displayed and an image produced by shifting the position of the aforementioned image on the screen,
a view area where the displayed image is seen double being in a position except right in front of the screen.

2. A video display comprising:
image separation means for restricting a view area in which an image displayed on a screen can be seen; and
display means for producing an image to be displayed and an image different from the image and displaying the produced images on the screen,
a view area where the different image is seen or a view area where the image to be displayed and the different image are seen in an overlapped state being in a position except right in front of the screen.

3. A video display comprising:
image separation means for restricting a view area in which an image displayed on a screen can be seen; and
display means for displaying an image to be displayed,
a view area where a moiré is seen being in a position except right in front of the screen.

4. The video display according to any one of claims 1 to 3, wherein
the execution and the stop of an image separating function in the image separation means are switched.

5. The video display according to claim 4, wherein
the image separating function in the image separation means is executed when a privacy mode is selected by a user.

6. The video display according to claim 4, wherein
the image separating function in the image separation means is executed when the image to be displayed is an image of an e-mail.

7. The video display according to any one of claims 4 to 6, wherein
the luminance of the screen is lowered when the image separating function in the image separation means is executed.

8. The video display according to any one of claims 4 to 7, wherein
the contrast of the screen is lowered when the image separating function in the image separation means is executed.

9. A controller (5) for a display (20) having a screen (21) and a filter (22) for variably masking selective areas of said screen from view, said controller configured to output a composite image for display on said screen, said composite image including first and second images, and to output a pattern for causing said filter to mask said second image such that a viewer at a given position is provided with a view of said first image unobstructed by the second image.

10. Apparatus comprising:
the controller (5) according to claim 9;
a screen (21) configured to receive the composite image from said controller; and
a filter (22) configured to receive the pattern from said controller.

11. A method of operating a controller for a display (20) having a screen (21) and a filter (22) for variably masking selective areas of said screen from view, the method comprising:
outputting a composite image for display on said screen, said composite image including first and second images, and
outputting a pattern for causing said filter to mask said second image such that a viewer at a given position is provided with a view of said first image but not said the second image.

12. A computer program which, when executed by a data processor, causes the data processor to perform the method according to claim 11.
